# EUROPEAN PATENT APPLICATION

(11) **EP 4 763 008 A1**
(43) Date of publication of application: **24.06.2026**
(21) Application number: 25224316.7
(22) Date of filing: 17.12.2025
(51) Int. Cl.: A47J 31/44, A47J 31/52

(54) **OPTIMIZED CONTROL OF A MILK PUMP IN A MILK MODULE IN AN AUTOMATIC BEVERAGE PREPARATION MACHINE**

(30) Priority: 18.12.2024 IT 202400028965
(71) Applicant: EVOCA S.p.A., 24030 Valbrembo (BG) (IT)
(72) Inventor: ZONATO, Alberto, 24030 VALBREMBO (BG) (IT)
(74) Representative: Studio Torta S.p.A.

(57) **Abstract**

A milk module **(1)** for an automatic beverage preparation machine, comprising a milk line **(2)** extending from a cold liquid milk container **(3)** to a milk dispensing nozzle **(5)** in a beverage dispensing compartment and comprising a milk pump **(6),** by means of which cold liquid milk is drawn from the cold liquid milk container **(3)** and supplied to a mixing chamber of a milk frother **(7)** arranged upstream of the milk dispensing nozzle **(5);** an air line **(8)** extending from an air source **(9)** to the mixing chamber of the milk frother **(7)** to supply air thereto; an electronic sensory system **(13)** designed to detect and output an output indicative of operating quantities of the milk module **(1)** and comprising cold milk temperature in the cold liquid milk container **(3)** and air depression in the air line (8); and an electronic control unit **(14)** in communication with the electronic sensory system **(13)** to receive output thereof and to the milk pump **(6)** to control operation thereof during milk-based beverage preparation cycles. The electronic control unit **(14)** is configured to store functional data necessary to control operation of the milk pump **(6)** during milk-based beverage preparation cycles and comprising milk pump data representative of either one and the same or different speed or electric power profiles at which the milk pump **(6)** is to be operated during milk-based beverage preparation cycles as a function of the temperature of the cold milk drawn from the cold liquid milk container **(3);** and control operation of the milk pump **(6)** during milk-based beverage preparation cycles based on the stored functional data and air depression in the air line **(8).**

## Description

### TECHNICAL FIELD OF THE INVENTION

The present invention relates in general to the field of table-top automatic beverage preparation machines and to free-standing automatic beverage vending machines, and in particular to milk modules for use in these automatic beverage preparation and vending machines.

Milk modules of this type are used as stand-alone units or, more commonly, are placed alongside, or integrated into, automatic beverage preparation and vending machines to form therewith a multi-product production unit.

### BACKGROUND OF THE INVENTION

As is known, some types of table-top automatic beverage preparation machines and free-standing automatic beverage vending machines are able to instantly prepare and dispense hot or cold beverages based on liquid milk, such as, for example, hot milk or latte macchiato, or hot beverages obtained by brewing with pressurised hot water brewing substances, such as, for example, coffee- or tea-based beverages containing liquid, hot or cold, frothed or plain milk, for example espresso macchiato, cappuccino, etc.

In these automatic beverage preparation and vending machines, the liquid milk is contained in a disposable container, for example of the so-called *bag-in-box* type, and is stored at a certain temperature, for example 5-8 °C, inside refrigerating cells associated externally or internally with the automatic beverage preparation and vending machines.

The liquid milk is drawn from the containers in an amount appropriate for the beverage under preparation and fed to a milk frothing and heating assembly, in which the liquid milk can, when required, be mixed with air to froth it, and/or with steam, to heat it to a desired temperature.

The liquid milk is drawn from the containers and fed to the milk frothing and heating assembly either by vacuum, in particular by the Venturi effect, or by suction using a pump, for example a gear pump.

While the vacuum milk supply system is proportional to the vacuum value with a limited flow rate range which is characteristic of the geometric dimensions of the system, the milk pump supply system allows the flow rate range to be widely adjusted.

The limit values are generally regulated by a correct compromise between the milk dispensing speed, the dispensed beverage temperature, a stable milk dispensing flow and the absence of bubbles during dispensing and in the cup.

The most common logics for controlling the milk pump during preparation of a milk-based beverage may be divided into two main categories: switching logics in which the milk pump is switched on at a constant, full or partialised, electric power or, alternatively, flow rate or speed, and feedback adjustment logics in which the milk pump is feedback controlled based on two or more speed targets (feedback on encoder).

To these control logics, an initial system calibration phase can be added to identify the performance characteristics of the milk pump.

The Applicant has found that the known milk pump control logics can, however, exhibit some limitations, and in particular:
- constant, full or partialised, electric power/flow rate/speed: this logic does not take into account the cold milk temperature in the milk container, depending on which, an optimal dispensing speed having been estimated to ensure the desired milk temperature, a higher milk pump speed would result in a colder beverage being produced and, vice versa, a lower milk pump speed would result in a hotter beverage or defects in the beverage dispensing flow due to bubble creation being produced. A variation in the starting milk temperature cannot therefore be compensated for by a fixed control of the flow rate;
- speed target tracking: this case represents a similar way to dispensing with constant partialised flow rate and therefore has the same limitations; and
- the introduction of a calibration phase makes it possible to mitigate the performance differences between lots of milk pumps, but it cannot mitigate other external disturbances such as, for example, cold milk temperature variation.

### OBJECT AND SUMMARY OF THE INVENTION

The object of the present invention is to provide a milk pump control logic that allows the milk pump speed to be precisely adjusted as a function of estimated or measured cold milk temperature, mitigation of the effects induced by the variability of the measurement or estimation of the cold milk temperature and maximisation of the in-cup milk-based beverage temperature without introduction of undesirable effects such as an intermittent beverage flow or bubbles in the beverage, so as to obtain an improvement in the organoleptic and aesthetic qualities of the milk-based beverage compared to known systems.

According to the present invention, a milk module for producing frothed or plain, cold or hot milk is provided, as claimed in the appended claims.

### BRIEF DESCRIPTION OF THE DRAWINGS

Figure 1 shows a hydraulic diagram of a milk module.
Figures 2 and 3 show graphs of time developments of quantities of the milk module during milk-based beverage production.

### DETAILED DESCRIPTION OF EMBODIMENTS OF THE INVENTION

The present invention will now be described in detail with reference to the appended figures to allow a person skilled in the art to make and use it. Various modifications to the described embodiments will be immediately apparent to those skilled in the art and the generic principles described can be applied to other embodiments and applications without thereby departing from the protective scope of the present invention, as defined in the appended claims. Therefore, the present invention should not be considered limited to the embodiments described and illustrated but should be accorded the broadest protective scope consistent with the features described and claimed.

The technical and scientific terms used herein have the same meaning commonly used by those of ordinary skill in the art to which the present invention pertains. In case of conflict, the present description, including the definitions provided, shall be binding. Furthermore, the examples are provided for purely illustrative purposes and as such should not be considered limiting. The block diagrams included in the appended figures and described below are not to be understood as a representation of structural features, i.e. constructive limitations, but should be interpreted as a representation of functional features, i.e. intrinsic properties of the devices and defined by the effects obtained, i.e. functional limitations, and which can be implemented in different ways, thus so as to protect the functionality thereof.

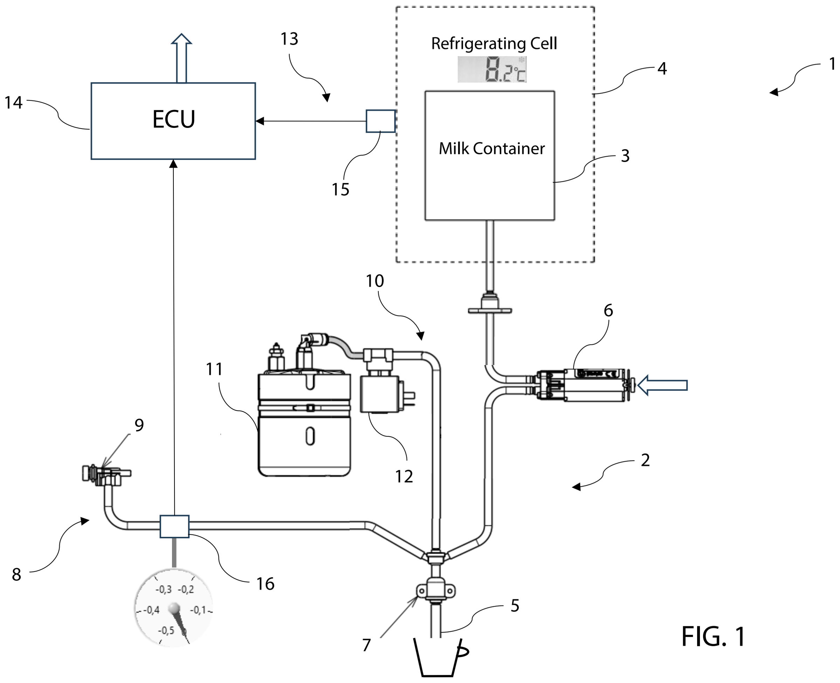

In Figure 1, a milk module for an automatic beverage preparation machine (not shown) is shown and referenced by reference numeral **1,** and only those parts of which useful for understanding the present invention are shown.

The milk module **1** comprises a milk line **2** extending from a disposable cold liquid milk container **3** in a refrigerating cell **4** to a milk dispensing nozzle **5** in a beverage dispensing compartment and comprising a milk pump **6,** conveniently of a gear type, by means of which cold liquid milk is drawn from the cold liquid milk container **3** and supplied to a mixing chamber of a milk frother **7** arranged immediately upstream of the milk dispensing nozzle **5.**

The milk module **1** further comprises an air line **8** extending from an air source **9** to the mixing chamber of the milk frother **7** to supply air thereto. The air source **9** can be either external environment, whereby air is supplied to the mixing chamber of the milk frother **7** through an air filter and an on-off or proportional shut-off valve (not shown) operable to interrupt air supply to the mixing chamber of the milk frother **7** when plain milk-based beverages are to be prepared, or an electronically-controlled electric air suction pump.

The milk module **1** further comprises a steam line **10** extending from a steam source, usually a steam boiler **11,** to the mixing chamber of the milk frother **7** to supply steam thereto through a shut-off valve **12** operable to interrupt steam supply to the mixing chamber of the milk frother **7** when cold milk-based beverages are to be prepared.

The milk module **1** further comprises:
- an electronic sensory system **13** designed to measure and output an output, usually of electrical type, indicative of different operating quantities of the milk module **1;** and
- an electronic control unit **14,** typically of a microprocessor type, in communication with, in particular electrically connected to, the electronic sensory system **13** to receive output thereof and to the steam boiler **11,** the shut-off valve **12** and the milk pump **6** to control operation thereof with appropriate commands, typically of electrical type, during milk-based beverage preparation cycles, in the manner described in detail below.

The present invention originates from the Applicant's observation that when the speed or power of the milk pump **6** is relatively low to such an extent as to generate defects in the milk flow in the milk line **2,** in the air line **8** a particular phenomenon tales place consisting of a sudden and temporary drop in air pressure (air depression).

The Applicant has therefore conceived of exploiting this particular phenomenon to correct the flow rate/power of the milk pump **6** so as to mitigate the adverse effects generated by the limits of the control logics of the milk pump **6** described above with the aim of ensuring:
- precise adjustment of the speed of the milk pump **6** as a function of estimated or measured cold liquid milk temperature;
- mitigation of the effects induced by the variability of the measurement or estimation of the cold liquid milk temperature, and
- maximisation of the in-cup beverage temperature without introducing undesirable effects such as an intermittent beverage flow or bubbles in the beverage.

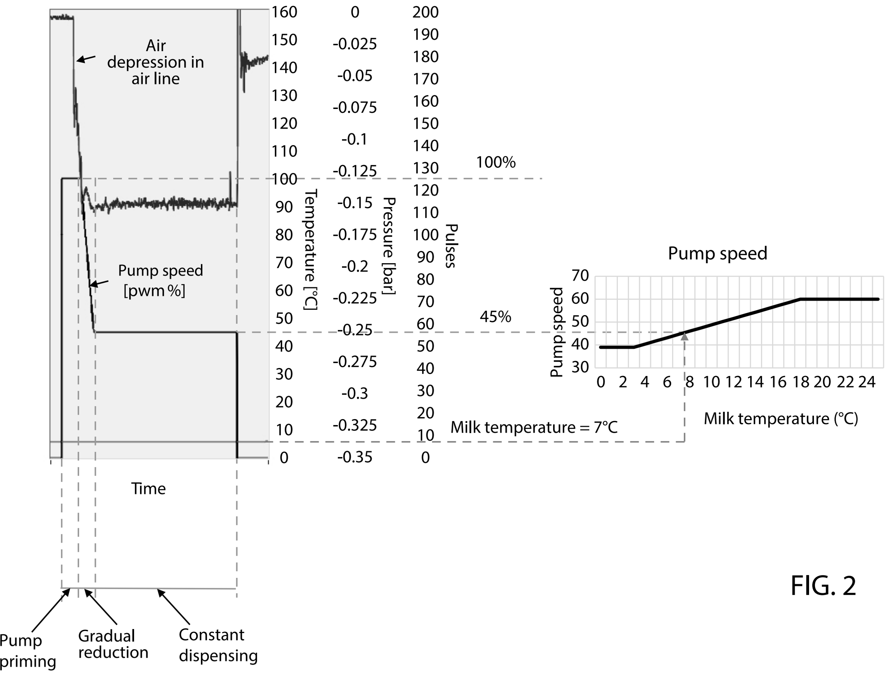

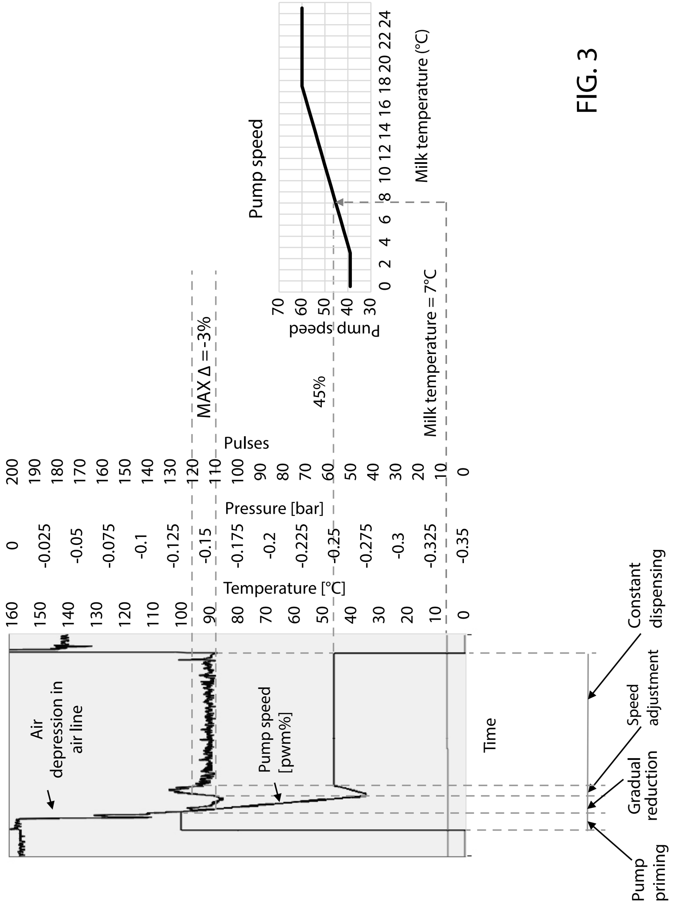

To this end, the electronic control unit **14** is configured to control operation of the milk pump **6** based on the following quantities:
- measured or estimated cold milk the temperature in the cold liquid milk container **3,** and
- measured or estimated air depression in the air line **8,**
in the manner described in detail below with reference to Figures 2 and 3.

The temperature of the cold milk in the cold liquid milk container **3** is information that can be measured directly or estimated indirectly based on the temperature of the refrigerating cell **4** in which the cold liquid milk container **3** is placed.

In particular, in an embodiment shown in Figure 1, the cold milk temperature in the cold liquid milk container **3** or the temperature of the cold storage cell **4** can be measured by means of a dedicated temperature sensor **15** associated with the cold liquid milk container **3** or with the refrigerating cell **4** and in communication with the electronic control unit **14,** which is therefore configured to receive and store this information, or in those automatic beverage preparation machines in which the electronic control unit **14** is not configured to autonomously acquire this information, but the temperature of the refrigerating cell **4** is only displayed on a display of the refrigerating cell **4** or of the automatic beverage preparation machine, the cold milk temperature in the cold liquid milk container **3** or the temperature of the refrigerating cell **4** can be manually entered by an operator into the electronic control unit **14** using a menu displayed on a display of the automatic beverage preparation machine, after having read it from the display.

In a different embodiment not shown, the temperature sensor **15,** instead of being a physical sensor associated with the cold liquid milk container **3** or with the refrigerating cell **4,** could be a virtual sensor implemented by the electronic control unit **14** and designed to compute4 the cold milk temperature in the cold liquid milk container **3** based on the temperature of the refrigerating cell **4** in which the cold liquid milk container **3** is placed, in the manner not described in detail as it does not form part of the present invention.

Similarly, air depression in the air line **8** is information that can be measured directly or estimated indirectly based on other quantities of the milk module **1.**

In particular, in an embodiment shown in Figure 1, air depression in the air line **8** can be measured by means of a dedicated air depression sensor **16** arranged along the air line **8** to measure and output an output, typically of electrical type, indicative of air depression in the air line **8,** and in communication with, in particular electrically connected to, the electronic control unit **14,** which is therefore configured to receive the output of the air depression sensor **16.**

In a different embodiment not shown, the air depression sensor **16,** instead of being a physical sensor arranged along the air line **8,** can be a virtual sensor implemented by the electronic control unit **14** and designed to compute air depression in the air line **8** based on the other quantities of the milk module **1,** in the manner not described in detail as it does not form part of the present invention.

To control the operation of the milk pump **6,** the electronic control unit **14** is configured to:
- store functional data necessary for controlling the milk pump latte **6** during preparation cycles of milk-based beverages dispensable from the automatic beverage preparation machine and comprising, among others and limited to the present invention, milk pump data representative, conveniently in table form, either of one and the same or of different milk pump speed profiles, as shown in Figures 2 and 3, or, alternatively, of electric power or, still alternatively, of flow rate of the milk pump **6** at which the milk pump **6** is to be operated during the preparation cycles of milk-based beverages dispensable from the automatic beverage preparation machine, as a function of the temperature of the cold milk drawn from the cold liquid milk container **3;** and
- control operation of the milk pump **6** during a milk-based beverage preparation cycle based on the stored functional data, and in particular on the milk pump data and on the air depression in the air line **8,** in the manner described in detail below with reference to Figures 2 and 3.

In particular, the electronic control unit **14** is configured to closed-loop control operation of the milk pump **6 ,** conveniently by means of PID (Proportional-Integral-Derivative) control techniques, based on the air depression in the air line **8** so as to cause the milk pump **6** to operate in the manner described below with reference to Figures 2 and 3, which graphically show time developments of quantities of the milk module **1** during a milk-based beverage preparation cycle, in particular the air depression in the air line **8** and the speed of the milk pump **6,** in two different operating conditions of the milk module **1** in which either the measured or the estimated temperature of the cold milk drawn from the cold liquid milk container **3** corresponds (Figure 2) or fails to correspond (Figure 3) to the actual temperature thereof.

With initial reference to Figure 2, either the stored speed or electric power profile of the milk pump **6** is designed to cause the milk pump **6** to be controlled during a milk-based beverage preparation cycle in the following manner:
- during an initial phase, so-called pump priming phase, of the milk-based beverage preparation cycle, the milk pump **6** is suddenly brought to operate at full speed, i.e., at the maximum speed or, alternatively, electric power at which the milk pump **6** is designed to operate, and operated at full speed for a relatively short duration, for example 2 seconds;
- at the end of the pump priming phase, during a subsequent milk pump gradual speed/electric power reduction phase, the speed or, alternatively, the electric power at which the milk pump **6** is operated is suddenly and gradually, conveniently but not necessarily linearly, reduced until a partialised speed or electric power is reached, i.e., a speed or electric power lower than the maximum speed or electric power at which the milk pump **6** is designed to operate, for example equal to 45% of the latter; this subsequent milk pump gradual speed/electric power reduction phase, has also a relatively short duration, conveniently but not necessarily shorter than that of the pump priming phase, for example 1 second; and
- at the end of the milk pump gradual speed/electric power reduction phase, during the remaining part of the milk-based beverage preparation cycle, which represents an actual milk-based beverage dispensing phase, whose duration is proportional to the "length" of the beverage under production, understood as the milk requirement necessary for the milk-based beverage preparation, the milk pump **6** is maintained to operate at the partialised speed or electric power reached at the end of the preceding milk pump gradual speed/electric power reduction phase, in the example considered at 45% of the maximum speed or electric power at which the milk pump **6** is designed to operate.

To achieve the speed or electric power profile shown in Figure 2, the electronic control unit **14** is configured to control operation of the milk pump **6** during a milk-based beverage preparation cycle by means of Pulse Width Modulation (PWM) techniques, in particular by generating an appropriate pulse-width modulated electrical command signal for the milk pump **6.**

According to one aspect of the invention, the electronic control unit **14** is configured to compute the partialised speed or electric power at which the milk pump **6** is to be operated during the milk-based beverage dispensing phase based on the stored functional data, and in particular the milk pump data which, as previously stated, are representative of the speed or, alternatively, the electric power or, still alternatively, the flow rate at which the milk pump **6** is to be operated during a milk-based beverage preparation cycle as a function of either the measured or the estimated temperature of the cold milk drawn from the of cold liquid milk container **3.**

As shown in Figures 2 and 3, the above-described variation of the speed or electric power of the milk pump **6** causes a drastic drop in the air pressure (air depression) in the air line **8** during the pump priming phase from an initial value substantially corresponding to atmospheric pressure to a markedly negative value, thus generating a strong air depression in the air line **8,** to then return to assume values substantially corresponding to atmospheric pressure at the end of the milk-based beverage dispensing phase.

In this regard, as clearly emerges from the comparison of Figures 2 and 3, the Applicant has observed that when the measured or estimated temperature of the cold milk drawn from the cold liquid milk container **3** corresponds to the actual temperature thereof, during the milk-based beverage dispensing phase the air depression in the air line **8** remains substantially constant or in any case presents rather contained variations, whereas when the measured or estimated temperature of the cold milk drawn from the cold liquid milk container **3** fails to correspond to the actual temperature thereof, at the beginning of the milk-based beverage dispensing phase the air depression that establishes in the air line **8** presents more marked variations.

The Applicant has therefore conceived of exploiting this phenomenon that takes place in the air line **8** to determine whether the measured or estimated temperature of the cold milk drawn from the cold liquid milk container **3** corresponds to the actual temperature thereof and to carry out a consequent correction of the speed or electric power at which the milk pump **6** is operated in such a way as to bring the speed or electric power of the milk pump **6** to assume the value that in the stored milk pump data is associated with the actual temperature of the cold milk drawn from the cold liquid milk container **3,** thus cancelling or compensating for any discrepancy between the measured or estimated temperature and the actual temperature of the cold milk drawn from the cold liquid milk container **3.**

For this purpose, the electronic control unit **14** is further configured to:
- monitor air depression in the air line **8** during a milk-based beverage preparation cycle based on the output of the air depression sensor **16,**
- check whether the air depression in the air line **8** in a specific portion of the milk-based beverage preparation cycle fulfils a certain proprietary intervention criterion, and
- intervene appropriately on the speed or electric power of the milk pump **6** when air depression in the air line **8** in the specific portion of the milk-based beverage preparation cycle fulfils the intervention criterion.

In one embodiment, the proprietary intervention criterion is checked to be satisfied starting from the milk pump gradual speed/electric power reduction phase or during a transition from the milk pump gradual speed/electric power reduction phase to the milk-based beverage dispensing phase.

In one embodiment, the intervention criterion is based on the variation of the air depression in the air line **8** starting from the milk pump gradual speed/electric power reduction phase and on a one- or multi-threshold rule.

In particular, in this embodiment, the electronic control unit **14** is configured to:
- during the aforementioned specific portion of the milk-based beverage preparation cycle, start to determine, at a certain frequency, for example every 100 ms, a series of values of the air depression in the air line **8;**
- compute a series of values, conveniently expressed in percentage terms, of the deviation or difference, conveniently relative, of the air depression in the air line **8;**
- compare the values of the deviation of the air depression in the air line **8** with at least one predefined deviation threshold, and
- intervene on the control of the milk pump **6** when one or a series of values of the deviation of the air depression in the air line **8** exceed the deviation threshold.

Conveniently, to attenuate less significant variations of the computed values, each value is averaged with one or more of the preceding values, conveniently by means of a moving average. In particular, air depression values are averaged for example with thirty preceding air depression values, while air depression values deviation values are conveniently averaged with a smaller number of preceding air depression deviation values, for example three values.

As for the deviation threshold, it has proved appropriate to choose a value that is not too small, for example less than 3%, as it could be exceeded due to the noise inevitably present on the output signal of the air depression sensor **16,** but not too high either, for example greater than 10%, as this inevitably causes a decrease in the reactivity of the control of the milk pump **6.**

Finally, as regards the intervention on the control of the milk pump **6,** as shown in Figure 3, the electronic control unit **14** is configured to correct the speed or electric power at which the milk pump is caused to operate **6** by making a series of corrections to the speed or electric power of the milk pump **6** each of a predetermined magnitude, for example of 1%, until the air depression deviation values return lower than the deviation threshold.

The Applicant has found experimentally that the above-described control of the milk pump **6** makes it possible to achieve the advantages that the invention sets out to achieve, namely on the one hand to precisely partialize the milk pump **6** to maximise the temperature of the dispensed milk-based beverage, thus avoiding that the milk-based beverage might overheat and boil if the milk pump **6** is partialised too much, or become cold if the milk pump **6** is partialised little or not at all, and on the other hand to dynamically correct the speed of rotation of the milk pump **6** so as to maximise the temperature of the dispensed milk-based beverage, regardless of the variability of the other quantities such as the cold milk temperature, the steam pressure and temperature, the variability of the functional characteristic of the components, etc., and regardless of the need to perform calibrations of the milk circuit.

## Claims

1. A milk module (**1**) for an automatic beverage preparation machine, comprising:
a milk line (**2**) extending from a cold liquid milk container (**3**) to a milk dispensing nozzle (**5**) in a beverage dispensing compartment and comprising a milk pump (**6**) operable to supply cold liquid milk from the cold liquid milk container (**3**) to a mixing chamber of a milk frother (**7**) arranged upstream of the milk dispensing nozzle (**5**);
an air line (**8**) extending from an air source (**9**) to the milk frother (**7**) to supply air to the mixing chamber of the milk frother (**7**);
a sensory electronic system (**13**) designed to measure and output an output indicative of operating quantities of the milk module (**1**) and comprising temperature of the cold milk in the cold liquid milk container (**3**) and air depression in the air line (8); and
an electronic control unit (**14**) in communication with the electronic sensory system (**13**) to receive the output thereof and to the milk pump (**6**) to control operation thereof during a milk-based beverage preparation cycle;
the electronic control unit (**14**) is configured to:
store functional data necessary to control operation of the milk pump (**6**) during milk-based beverage preparation cycles and comprising milk pump data representative of either one and the same or different speed or electric power profiles at which the milk pump (**6**) is to be operated during milk-based beverage preparation cycles, as a function of the temperature of the cold milk from the cold liquid milk container (**3**); and
control operation of the milk pump (**6**) during milk-based beverage preparation cycles based on the stored functional data and the air depression in the air line (**8**).

2. The milk module (**1**) of claim **1,** wherein the stored speed profile or electric power profile of the milk pump (**6**) is designed such that the milk pump (**6**) is controlled during a milk-based beverage preparation cycle as follows:
during an initial or pump priming phase of the milk-based beverage preparation cycle, the milk pump (**6**) is suddenly brought to operate at full capacity, namely, at a maximum speed or, alternatively, electric power at which the milk pump (**6**) is designed to operate;
at the end of the pump priming phase, during a subsequent during a subsequent milk pump gradual speed/electric power reduction phase, speed or, alternatively, electric power of the milk pump (**6**) is progressively, conveniently linearly, reduced until a partialised speed or, alternatively, electric power is reached, which is lower than the maximum speed or, alternatively, electric power at which the milk pump (**6**) is designed to operate; and
at the end of the milk pump gradual speed/electric power reduction phase, during a subsequent milk-based beverage dispensing phase, the milk pump (**6**) is operated at the partialised speed or, alternatively, electric power reached at the end of the milk pump gradual speed/electric power reduction phase.

3. The milk module (**1**) of claim **2,** wherein the electronic control unit (**14**) is further configured to compute the partialised speed or, alternatively, electric power at which the milk pump (**6**) is operated during a milk-based beverage dispensing phase based on the stored functional data.

4. The milk module (**1**) of claim **2** or **3**, wherein the electronic control unit (**14**) is further configured to:
monitor air depression in the air line (**8**) during a milk-based beverage preparation cycle;
check whether air depression in the air line (**8**) in a specific portion of the milk-based beverage preparation cycle fulfils a determined intervention criterion; and
intervene on the milk pump (**6**) when air depression in the air line (**8**) in the specific portion of the milk-based beverage preparation cycle fulfils the intervention criterion.

5. The milk module (**1**) of claim **4,** wherein the intervention criterion is based on variation of air depression in the air line (**8**) and on a single-threshold or multiple-threshold rule.

6. The milk module (**1**) of claim **4** or **5,** wherein the intervention criterion is checked to be fulfilled starting from the end of the milk pump gradual speed/electric power reduction phase or during a transition from the milk pump gradual speed/electric power reduction phase to the milk-based beverage dispensing phase.

7. The milk module (**1**) of claim **5** or **6,** wherein the electronic control unit (**14**) is further configured to:
during the specific portion of milk-based beverage preparation cycle, start to determine a series of values of the air depression in the air line (**8**);
compute a series of values of a deviation or offset of the air depression in the air line (**8**);
compare the computed values of the deviation of the air depression in the air line (**8**) with at least one predefined deviation threshold, and
intervene on the control of the milk pump (**6**) when one or more of the values of the deviation of the air depression in the air line (**8**) exceed the deviation threshold.

8. The milk module (**1**) of any one of claims **4** to **7,** wherein the electronic control unit (**14**) is further configured to correct the speed or, alternatively, the electric power at which the milk pump is operated (**6**) by making a series of corrections, each of a predetermined extent, to the speed or, alternatively, the electric power of the milk pump (**6**), until the intervention criterion is no longer fulfilled.

9. The milk module (**1**) of any one of the preceding claims, wherein the milk pump (**6**) is a gear pump.
